(19) Europäisches Patentamt
European Patent Office
Office européen des brevets

(11) **EP 2 096 260 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(51) Int Cl.:
**F01D 5/14** *(2006.01)* **F04D 29/54** *(2006.01)*
**F02C 3/067** *(2006.01)*

(21) Anmeldenummer: **09002681.6**

(22) Anmeldetag: **25.02.2009**

(54) **Strömungsarbeitsmaschine mit Rotorenanordnungen mit niedrigen Rotoraustrittswinkeln**

Turbo machine comprising rotor assemblies with small outlet flow deviation angle

Turbomachine comprenant des ensembles rotor ayant un faible angle de déviation du fluide en sortie

(84) Benannte Vertragsstaaten:
**DE FR GB**

(30) Priorität: **28.02.2008 DE 102008011645**

(43) Veröffentlichungstag der Anmeldung:
**02.09.2009 Patentblatt 2009/36**

(73) Patentinhaber: **Rolls-Royce Deutschland Ltd & Co KG**
**15827 Blankenfelde-Mahlow (DE)**

(72) Erfinder: **Gümmer, Volker, Dr.**
**85391 Allershausen (DE)**

(74) Vertreter: **Hoefer & Partner Patentanwälte mbB**
**Pilgersheimer Straße 20**
**81543 München (DE)**

(56) Entgegenhaltungen:
EP-A1- 0 441 097          EP-A2- 1 186 747
WO-A1-2008/026788     DE-A1- 2 552 073
GB-A- 609 322             GB-A- 944 166
GB-A- 2 085 976

**Beschreibung**

Die vorliegende Erfindung bezieht sich auf Strömungsarbeitsmaschinen wie Bläser, Verdichter, Pumpen und Ventilatoren axialer und halbaxialer Bauart mit gasförmigem oder flüssigem Arbeitsmedium (Fluid). Die Strömungsarbeitsmaschine besteht aus einer oder mehreren Stufen. Jede Stufe umfasst einen Rotor und einen Stator. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind von einem Gehäuse umgeben. Die Maschine kann einen Stator vor dem ersten Rotor aufweisen (Vorleitrad). Die Statoren können -abweichend von der unbeweglichen Fixierungdrehbar gelagert sein und zur Verstellung eine von außerhalb des Ringkanals zugängliche Spindel besitzen.

Alternativ kann die Strömungsarbeitsmaschine eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

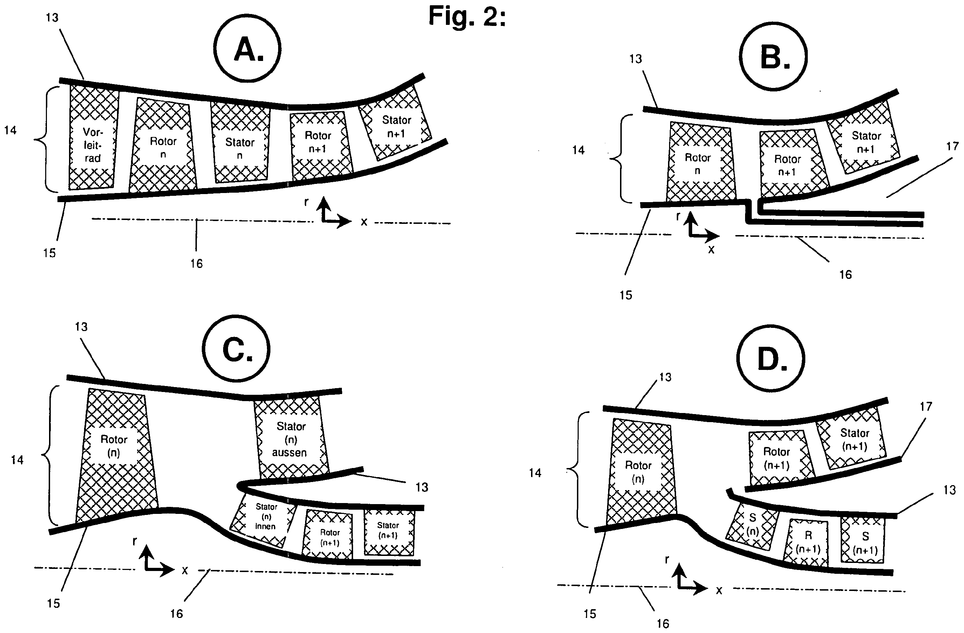

Weiterhin kann die erfindungsgemäße Strömungsarbeitsmaschine bei Mehrstufigkeit zwei gegenläufige Wellen besitzen, sodass die Rotorschaufelreihen von Stufe zu Stufe die Drehrichtung wechseln. Hierbei existieren keine Statoren zwischen gegenläufigen Rotoren. Die Fig. 2 zeigt beispielhaft vier nach dieser Beschreibung mögliche Konfigurationen der Strömungsarbeitsmaschine.

Die Stabilitätsgrenze von Strömungsarbeitsmaschinen wie Bläsern, Verdichtern, Pumpen und Ventilatoren wird maßgeblich durch die Wahl des Arbeitskoeffizienten (spezifische Enthalpieumsetzung $\delta h$ bezogen auf das Quadrat der Rotorblattgeschwindigkeit $U^2$) bestimmt. Aus diesem Grund wird ein Arbeitskoeffizient von 0,5 üblicherweise nicht überschritten.

Für die heute erforderlichen hohen Stufendruckverhältnisse sind sehr hohe Rotorblattgeschwindigkeiten zu wählen, die gegebenenfalls zu einer im Überschall liegenden Relativzuströmung am Rotor führen. In diesem Fall ergeben sich nach dem Stand der Technik Rotorschaufelformen mit hohem Staffelungswinkel, niedriger Profilwölbung und einer hohen relativen Drallkomponente der Rotorabströmgeschwindigkeit.

Mit diesen Eigenschaften ist eine steil geneigte Stufenkennlinie (Stufendruckverhältnis aufgetragen über dem Massenstrom) verbunden. Dem entsprechend kommt es bei einer geringen Abnahme des Massenstroms zu einem erheblichen Anstieg des Stufendruckverhältnisses, der bei mehrstufigen Strömungsarbeitsmaschinen zu einer schnell zunehmenden Verstimmung der einzelnen Stufen beiträgt.

Der für einen sicheren Betrieb notwendige Abstand zwischen Betriebslinie und Stabilitätsgrenze im Kennfeld der Strömungsarbeitsmaschine muss daher sehr groß sein. Für einen Triebwerkverdichter beispielsweise sind üblicherweise 25% bis 30% des Auslegungsdruckverhältnisses als Stabilitätsmarge vorzusehen.

Bauweisen nach dem Stand der Technik orientieren sich an Arbeitskoeffizienten unterhalb 0,5. Die Einhaltung dieses Entwurfskriteriums erfordert zur Erbringung hoher Druckverhältnisse der Strömungsarbeitsmaschine entweder sehr hohe Rotorblattgeschwindigkeiten und/oder eine hohe Anzahl von Stufen. Zudem ist ein hohes Maß an Stabilitätsmarge vorzusehen.

In Hochdruckverdichtern von Flugtriebwerken beispielsweise werden aus diesem Grund bei entsprechend hohen Rotorblattgeschwindigkeiten Rotorzuströmmachzahlen von beträchtlich über eins zugelassen, mit der Folge hoher Strömungsverluste. In einem solchen Verdichter ist die Gesamtkennlinie sowie jede einzelne Stufenkennlinie sehr steil beschaffen, was zu einer starken Stufenverstimmung bei Teillastbetrieb führt. Die Anzahl der Hochdruckverdichterstufen beträgt dennoch stets 6 oder mehr.

Einer etwas anderen Problematik sind die Boosterstufen eines Zweiwellentriebwerks ausgesetzt. Ihnen steht wegen der direkten Drehzahlkopplung an den Fan (Bläser) nur eine geringe Rotorblattgeschwindigkeit zur Verfügung, sodass nach gegenwärtigem Stand der Technik extrem viele Boosterstufen für eine geringe Steigerung des Druckverhältnisses eingesetzt werden müssen.

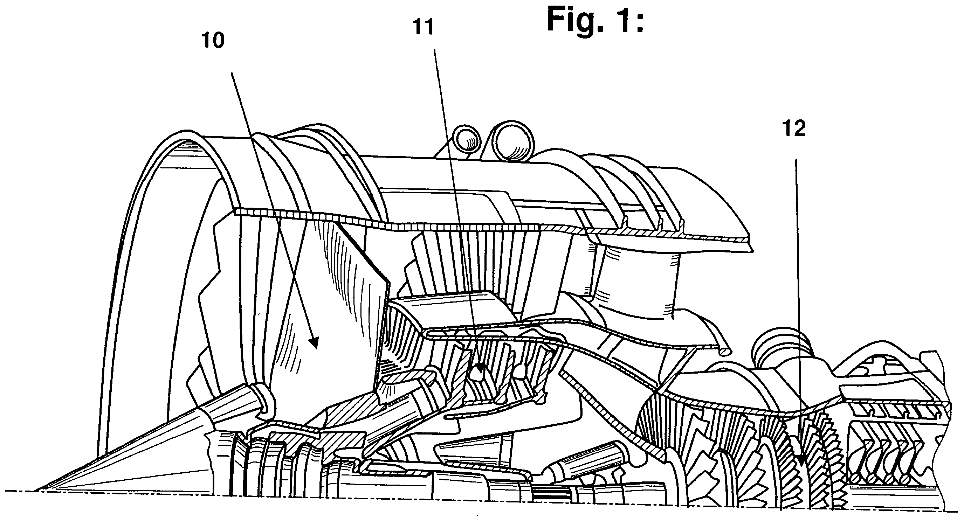

Fig.1 zeigt hierzu den Stand der Technik am Beispiel des Verdichtungssystems eines Flugtriebwerks mittlerer Schubklasse.

Aus der WO 2008/026788 A1 ist eine schematische Darstellung der sich durch die Strömung ergebenden Geschwindigkeitsdreiecke ersichtlich. Weiterhin definiert die Druckschrift die für diese Druckschrift relevanten Winkel. Angaben über Profilsehnen oder die Lage der gezeigten Profilschnitte enthält die Druckschrift nicht.

Die GB 609 322 A zeigt eine Verdichterschaufel, ohne anzugeben, welche Schnittansicht gezeigt ist. Es werden ganz allgemein verschiedene, für die Beschreibung dieser Druckschrift relevante Winkel definiert. Die gezeigte Abströmung vom Profil ist ohne die Größenangabe der Winkel nur als allgemeiner Hinweis zu verstehen.

Aus der EP 1 186 747 A2 ist eine allgemeine Schnittdarstellung von Rotorschaufeln vorbekannt. Es ist weder ein Koordinatensystem angegeben, noch ist bezeichnet, um welche Schnitte es sich handelt. Es liegt somit keine maschinensystem-bezogene Darstellung vor, auch eine Angabe der Strömungsrichtung fehlt. Die Druckschrift beschreibt ein Verfahren zur Profiloptimierung, wobei die Schaufelprofile nur ganz allgemein gezeigt sind. Dieses Dokument offenbart die technischen Merkmale vom Oberbegriff vom unabhängigen Vorrichtungsanspruch 1. Ein weiterer Rotor ist aus der GB 944 166 A vorbekannt. Die gezeigten Schaufeldarstellungen sind schematische Abbildungen, welche weder Winkel noch die Lage der Schnitte erkennen lassen.

Eine weitere Ausgestaltung von Rotorschaufeln eines Verdichters zeigt die EP 0 441 097 A1. Diese Druckschrift definiert die Lage der einzelnen Winkel, sie gibt jedoch weder eine Größenordnung für die Winkel an, noch lässt sie die Lage der gezeigten Schnittansicht erkennen.

Eine weitere Ausgestaltung von Schaufeln eines Axialverdichters offenbart die DE 25 52 073 A1. Es sind bei den gezeigten Schnittansichten nur die Staffelungswinkel α angegeben. Die Druckschrift schweigt sowohl hinsichtlich der Metallwinkel, noch hinsichtlich einer Angabe, um welche Schnittebenen es sich handelt.

Die GB 2 085 976 A zeigt ebenfalls Definitionen von Winkeln allgemeiner Art. Die gezeigten Austrittswinkel sind anders definiert, als in der vorliegenden Erfindung, sie sind nämlich auf die Gitterfront bezogen. Auch diese Druckschrift beschreibt weder die Größe der Winkel noch die Art des gezeigten Schnittes.

Der vorliegenden Erfindung liegt die Aufgabe zugrunde, eine Strömungsarbeitsmaschine der eingangs genannten Art zu schaffen, welche unter Vermeidung des Standes der Technik durch eine spezielle Rotorkonfiguration eine sehr wirkungsvolle Erhöhung des realisierbaren Arbeitskoeffizienten bei weiterhin ausreichender Stabilität erreicht.

Erfindungsgemäß wird die Aufgabe durch die Merkmalkombination des Hauptanspruchs gelöst, die Unteransprüche zeigen weitere vorteilhafte Ausgestaltungen der Erfindung.

Im Einzelnen betrifft die Erfindung somit eine Strömungsarbeitsmaschine mit mindestens einer Rotorschaufelreihe mit einem deutlich über dem Stand der Technik liegenden Arbeitskoeffizienten, die - in ihrem Mittelschnitt oder/und gemittelt über der Schaufelhöhe betrachtet - zum einen einen geringen Drall der Absolutzuströmung aufweist und zum anderen einen geringen Drall der Relativabströmung besitzt.

Ein geringer Drall der Relativabströmung wird erfindungsgemäß dadurch erreicht, dass der betreffende Rotor im Bereich seiner Hinterkante im Wesentlichen eine Orientierung aufweist, die nur schwach von der Meridianströmungsrichtung, d.h. von einer Drallfreiheit abweicht.

Der mittlere bzw. gemittelte Austrittsmetallwinkel der Rotorschaufel beträgt bevorzugt zwischen 5° und 20°.

Im Besonderen betrifft die Erfindung die Anwendung der Rotorgestaltung auf die erste Rotorschaufelreihe, die in Strömungsrichtung hinter dem Fan im Kernstromabschnitt eines Flugtriebwerks angeordnet ist. Weiterhin betrifft die Erfindung die Anwendung des Rotorgestaltungskonzepts auf mehrere in Strömungsrichtung aufeinander folgende Stufen der Strömungsarbeitsmaschine.

Im Stand der Technik ist bislang unerkannt geblieben, dass sich das erforderliche Maß an Stabilitätsmarge reduzieren und gleichzeitig die realisierbare Höhe des Arbeitskoeffizienten erhöhen lässt, wenn nur die Strömungswinkel vor und hinter dem Rotor und somit die Gestaltung der Rotorschaufel in besonderer Weise ausgewählt werden.

Im Folgenden wird die Erfindung anhand von Ausführungsbeispielen in Verbindung mit den Figuren 1 bis 8 beschrieben. Dabei zeigt:

Fig.1:     ein Beispiel für ein Verdichtungssystem (Strömungsarbeitsmaschine) eines Flugtriebwerks mittlerer Schubklasse (Stand der Technik),

Fig.2:     eine schematische Darstellung erfindungsgemäßer Strömungsarbeitsmaschinen,

Fig.3:     die Definition von Meridianstromlinien und Stromlinienprofilschnitten,

Fig.4a:    den Rotor einer Strömungsarbeitsmaschine im Meridianschnitt,

Fig.4b:    die Anordnung der Geschwindigkeitsdreiecke und des Profils im Rotormittelschnitt, nach dem Stand der Technik und gemäß Erfindung,

Fig.5:     die Definition der Metallwinkel an Vorder- und Hinterkante eines Rotor- oder Statorschaufelschnitts,

Fig.6:     die erfindungsgemäße Festlegung der Metallwinkel des Rotors im Stromlinienmittelschnitt, Rotor mit niedrigem Austrittswinkel,

Fig.7:     die Bestimmung von Mittelwerten erfindungsgemäß relevanter Größen über der Rotorschaufelhöhe auf Grundlage von 21 Stromlinienschnitten,

Fig.8:     erfindungsgemäß besonders wirksame Konfigurationen mit Rotoren niedrigen Relativaustrittswinkels.

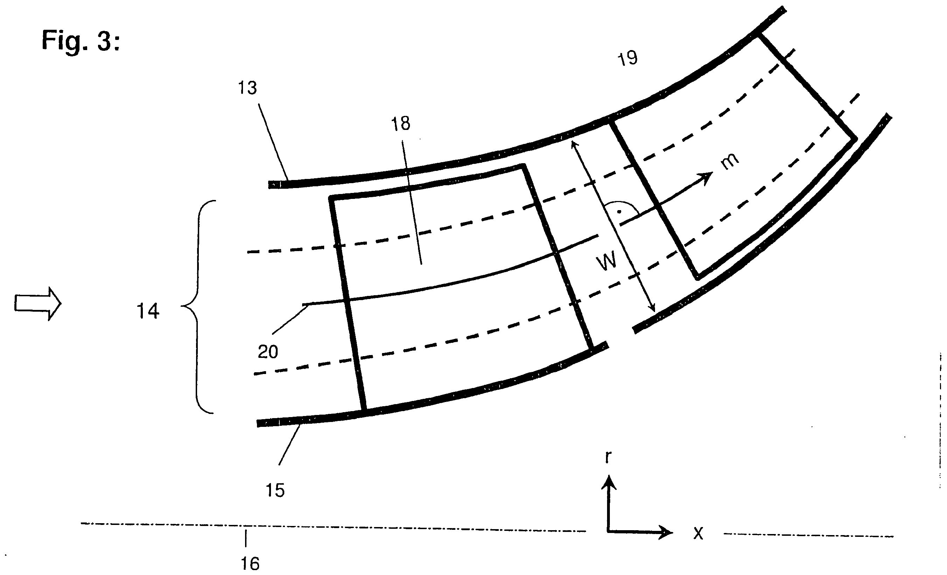

Die Fig.3 gibt eine genaue Definition der Meridianstromlinien und der Stromlinienprofilschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich bei gleicher relativer Unterteilung in Richtung der Kanalhöhe weitere Meridianstromlinien ergeben. Der Schnitt einer Meridianstromlinie mit einer Schaufel ergibt einen Stromlinienprofilschnitt, der Schnitt der mittleren Meridianstromlinie mit einer Schaufel ergibt den sogenannten Mittelschnitt.

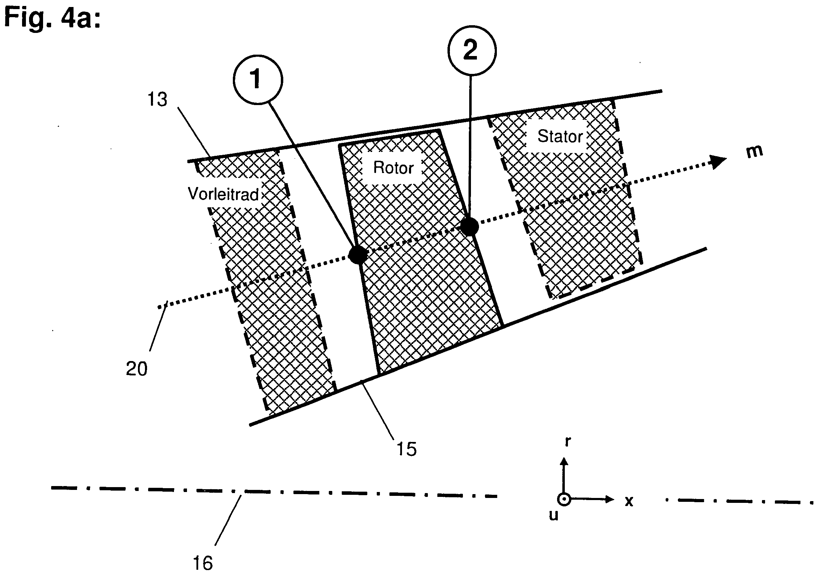

Die Fig.4a zeigt den Teil einer Strömungsarbeitsmaschine im Meridianschnitt, hier skizziert als eine Anordnung aus Vorleitrad (Stator), Rotor und Stator. Ebenfalls gezeigt ist die mittlere Meridianstromlinie, die den Mittelschnitt der Maschine kennzeichnet und deren Schnitt mit den Rotorkanten durch die Punkte 1 und 2 markiert ist. Die vorliegende Erfindung bezieht sich auf strömungstechnische und geometrische Gegebenheiten in der Vorder- und Hinterkantenebene des betreffenden Rotors. Die erfindungsrelevanten Größen werden als Mittelwert entlang der Rotorschaufelhöhe und direkt im Mittelschnitt (auf der mittleren Meridianstromlinie) festgelegt.

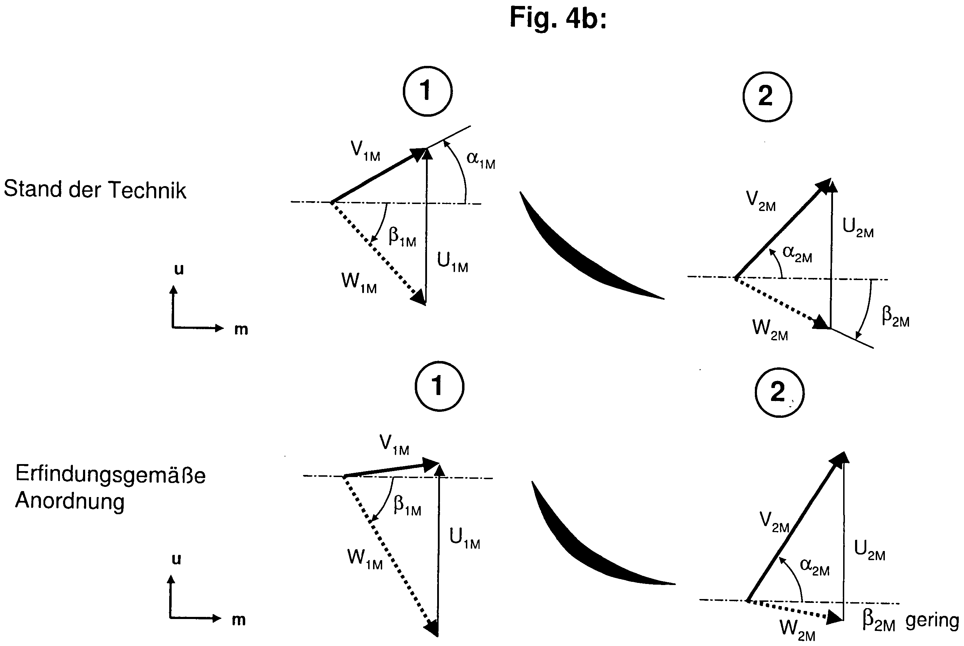

In Fig.4b werden zur Verdeutlichung des erfindungsgemäßen Konzeptes die Rotorschaufelgeometrie und die Strömungsgeschwindigkeitsvektoren im Rotormittelschnitt betrachtet. Dargestellt sind die Geschwindigkeitsdreiecke (Vektoren) am Punkt 1 vor dem Rotor, das Mittelschnittprofil des Rotors und die Geschwindigkeitsdreiecke (Vektoren) am Punkt 2 hinter dem Rotor.

Der obere Bildteil zeigt eine Anordnung nach dem Stand der Technik. Charakteristisch dafür ist eine Rotorzuströmung mit der Absolutgeschwindigkeit $V_{1M}$ unter dem absoluten Zuströmwinkel $\alpha_{1M}$. Der Winkel $\alpha_{1M}$ ist üblicherweise deutlich größer als null und in seltenen Fällen gleich null. Daraus ergibt sich mit der Umfangsgeschwindigkeit $U_{1M}$ eine Relativzuströmung mit der Geschwindigkeit $W_{1M}$ unter dem relativen Zuströmwinkel $\beta_{1M}$. Das Rotormittelschnittprofil ist mäßig stark gewölbt und lenkt die Strömung von $W_{1M}$ auf $W_{2M}$ um. Der sich ergebende relative Abströmwinkel $\beta_{2M}$ bleibt dabei als besonderes Kennzeichen signifikant größer als null, z. B. 30°.

Der untere Bildteil zeigt eine erfindungsgemäße Anordnung mit einem Rotor mit niedrigem Austrittswinkel. Die Rotorzuströmung erfolgt mit der Absolutgeschwindigkeit $V_{1M}$ unter dem absoluten Zuströmwinkel $\alpha 1$. Der Winkel $\alpha_{1M}$ ist betragsmäßig gering. Daraus ergibt sich mit der Umfangsgeschwindigkeit $U_{1M}$ eine Relativzuströmung mit der Geschwindigkeit $W_{1M}$ unter dem relativen Zuströmwinkel $\beta_{1M}$. Das Rotormittelschnittprofil ist sehr stark gewölbt und lenkt die Strömung in hohem Maße von $W_{1M}$ auf $W_{2M}$ um (extreme Strömungsumlenkung). Der sich ergebende relative Abströmwinkel $\beta_{2M}$ ist gering.

Im Weiteren gilt es nun, die erfindungsgemäß angestrebte Form der Geschwindigkeitsdreiecke an geometrischen Merkmalen der Rotorschaufel festzumachen, die als entscheidendes Gestaltungskriterium verwendet werden können.

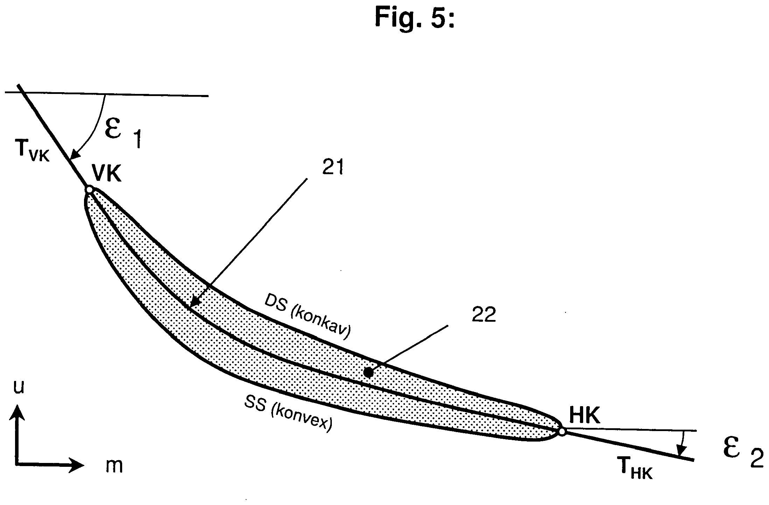

Die Fig. 5 zeigt zunächst schematisch die Definition der Metallwinkel an Vorder- und Hinterkante einer Rotor- oder Statorschaufel. Dargestellt ist ein Stromlinienprofilschnitt der Schaufel auf einer Meridianstromfläche (u-m-Ebene). Zur Bestimmung der Metallwinkel ist es notwendig, in der Ebene des Schaufelprofilschnitts die Profilskelettlinie, die Mittellinie zwischen Druckseite (DS) und Saugseite (SS) des Profils, zu ermitteln. Die am Vorder- und Hinterkantenpunkt (VK, HK) an die Profilskelettlinie angelegten Tangenten $T_{VK}$ und $T_{HK}$ quantifizieren die Ausrichtung des Profils. Der Eintrittsmetallwinkel $\varepsilon_{1M}$ ergibt sich schließlich zwischen der Tangente $T_{VK}$ und der Meridianrichtung m, der Austrittsmetallwinkel $\varepsilon_{2M}$ ergibt sich zwischen der Tangente $T_{HK}$ und der Meridianrichtung m.

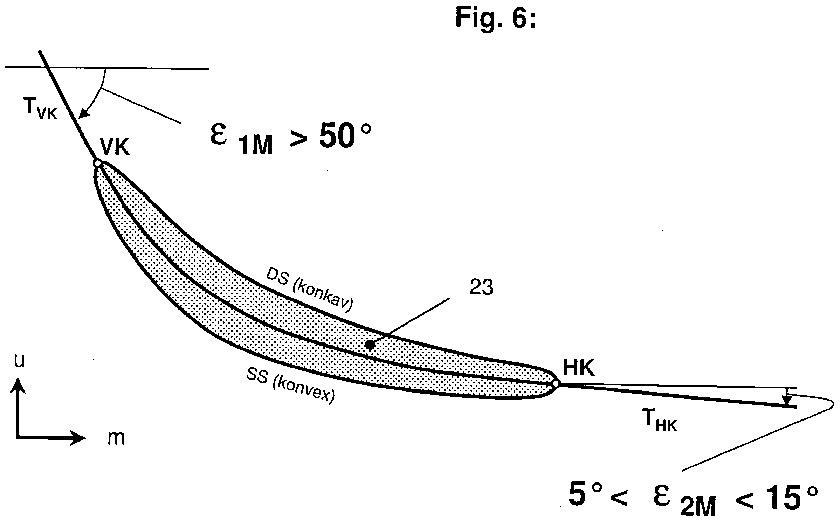

Die Fig.6 zeigt nun den Mittelschnitt eines Rotors mit Maßangaben für die Metallwinkel $\varepsilon 1$ 1 und $\varepsilon 2$. So ist erfindungsgemäß ein hoher Eintrittsmetallwinkel von größer als 50° mit einem zwischen 5° und 15° festgelegten Austrittsmetallwinkel zu kombinieren. Dies führt auf eine Umlenkung bzw. Wölbung im Mittelschnitt des Rotors, die weit über dem Stand der Technik liegt.

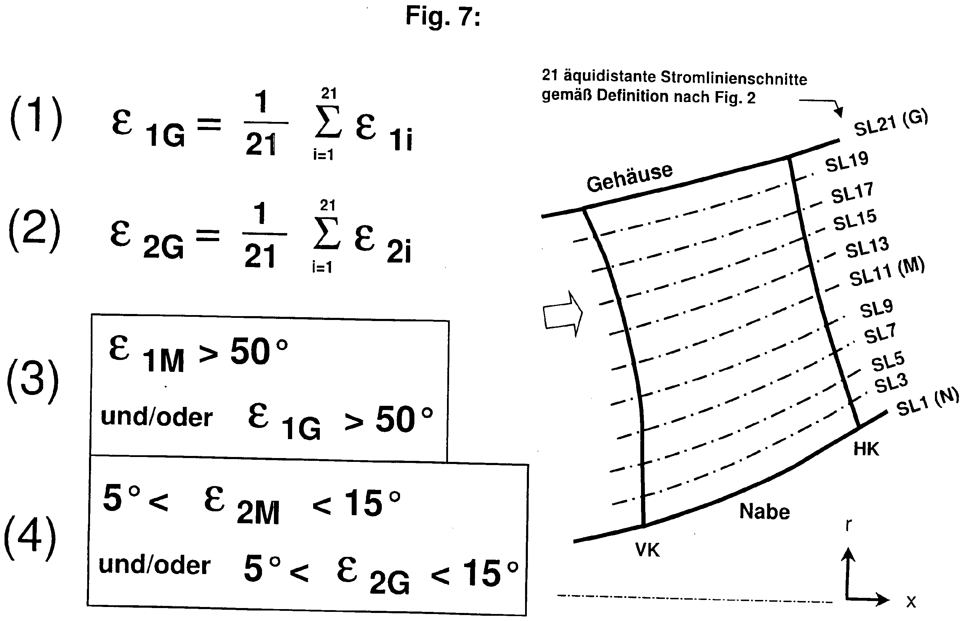

Die Darstellung der Geschwindigkeitsdreiecke und der Rotorprofilform erfolgte hier zunächst am Mittelschnitt des Rotors. Sie ist jedoch ebenfalls für eine Anzahl weiterer, auf anderen Schaufelhöhen befindlicher Stromlinienschnitte des Rotors durchzuführen, um neben den Größen im Mittelschnitt ebenfalls die erfindungsgemäß relevanten, über der Schaufelhöhe gemittelten Größen zu bestimmen. Die Methode zur Bestimmung der über Schaufelhöhe gemittelten Größen ist in Fig.7 gegeben. So ergibt sich beispielsweise der gemittelte Rotoreintrittsmetallwinkel $\varepsilon_{1G}$ durch arithmetische Mittelung der auf 21 äquidistanten Stromlinienschnitten festgestellten lokalen Werte. Analog ist bei Bestimmung des gemittelten Rotoraustrittsmetallwinkels $\varepsilon_{2G}$ zu verfahren, siehe Formeln (1) und (2) in Fig.7.

Die erfindungsgemäße Gestaltung eines Rotors mit niedrigem Austrittswinkel ist schließlich wie folgt zu beschreiben, siehe Formel (3) und (4) in Fig.7:

für die Ein- und Austrittsmetallwinkel muss erfüllt sein:

a.) $\varepsilon_{1M} > 50°$ und/oder $\varepsilon_{1G} > 50°$, und
b.) $5° < \varepsilon_{2M} < 15°$ und/oder $5° < \varepsilon_{2G} < 15°$

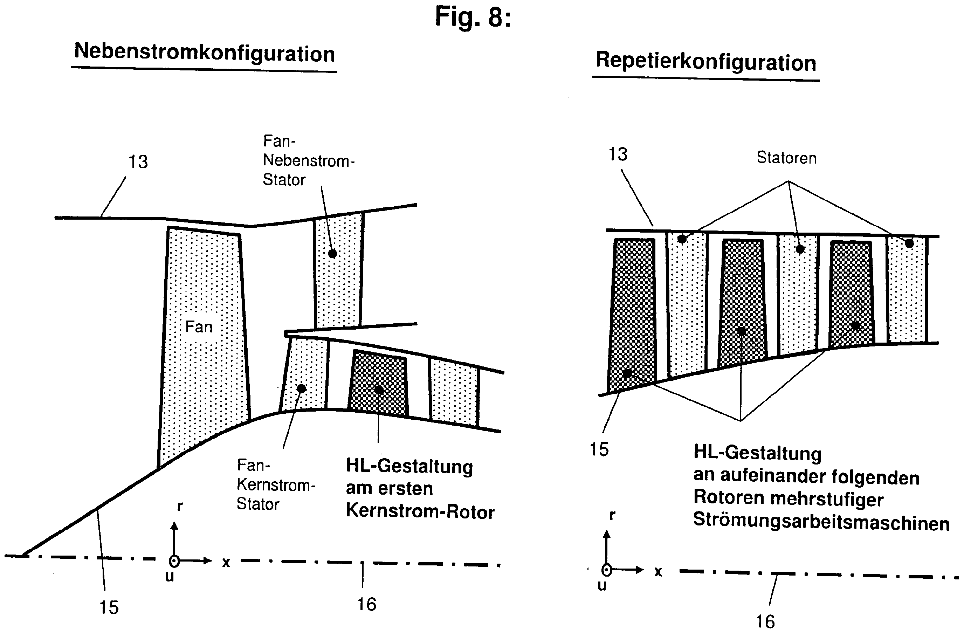

Es kommt zu einer besonders wirksamen Ausnutzung der Rotorgestaltung mit niedrigem Austrittwinkel, wenn erfindungsgemäß, wie in Fig.8 dargestellt, der **erste** im Kernstrombereich einer Strömungsarbeitsmaschine mit Nebenstromkonfiguration angeordnete Rotor auf diese Weise ausgeführt wird.

Weitere Vorteile für das Betriebsverhalten von Einzelstufen in einem Mehrstufenverband ergeben sich bei einer erfindungsgemäßen Repetierung der HL-Rotorgestaltung über mehrere in Strömungsrichtung direkt aufeinanderfolgende Stufen.

Erfindungsgemäß sind somit folgende Klauseln von besonderer Wichtigkeit:

Klausel 1:

Strömungsarbeitsmaschine mit mindestens einer für sehr hohe Arbeitskoeffizienten ausgelegten Rotorschaufelreihe, die - in ihrem Mittelschnitt oder/und gemittelt über der Schaufelhöhe betrachtet - eine mit wenig Drall behaftete Relativabströmung erzeugt, dadurch gekennzeichnet, dass der betreffende Rotor im Bereich seiner Hinterkante einen mittleren bzw. gemittelten Austrittsmetallwinkel der Rotorschaufeln zwischen 5° und 15° aufweist.

Klausel 2:

Strömungsarbeitsmaschine nach Klausel 1, mit mindestens einer für extrem hohe Arbeitskoeffizienten ausgelegten Rotorschaufelreihe, die - in ihrem Mittelschnitt oder/und gemittelt über der Schaufelhöhe betrachtet - eine mit wenig Drall behaftete Absolutzuströmung aufweist, dadurch gekennzeichnet, dass gegebenenfalls stromauf des Rotors befindliche Baugruppen wie Streben oder Schaufelreihen einen Austrittsmetallwinkel nicht größer als 15° aufweisen.

Klausel 3:

Strömungsarbeitmaschine nach Klausel 1 oder 2, dadurch gekennzeichnet, dass der mittlere bzw. gemittelte Eintrittsmetallwinkel mindestens 50° beträgt.

Klausel 4:

Strömungsarbeitsmaschine nach Klausel 1, 2 oder 3, dadurch gekennzeichnet, dass die erfindungsgemäße Rotorgestaltung auf der ersten Rotorschaufelreihe Anwendung findet, die in Strömungsrichtung hinter dem Fan im Kernstromabschnitt eines Flugtriebwerks angeordnet ist.

Die erfindungsgemäße Rotorgestaltung kann in mehreren in Strömungsrichtung aufeinander folgenden Stufen Anwendung finden (Repetierkonzept).

Die erfindungsgemäße spezifizierte Hochlast-Rotorgestaltung ermöglicht durch einfache Maßnahmen ein bislang unerreichtes Maß an Leistungskonzentration und Kompaktbauweise in Strömungsmaschinen wie Bläsern, Verdichtern, Pumpen und Ventilatoren. Bei mehrstufigen Strömungsarbeitsmaschinen ergibt sich zudem eine deutlich verbesserte Stufenabstimmung bei Teillastbetrieb. Insbesondere bei zwingend langsam laufenden Maschinen wie beispielsweise Boosterstufen eines Flugtriebwerkes wird eine Erhöhung der Belastbarkeit um den Faktor 2 bis 3 ermöglicht.

Für ein gegebenes Druckverhältnis der Strömungsmaschine läßt sich unter Beibehaltung oder Verbesserung des Wirkungsgrades von bis zu 2% die Anzahl der verbauten Teile um mindestens 50% gegenüber konventionell gebauten Boostern senken.

Die Kosten und das Gewicht des Triebwerks sinken um etwa 5%. Bei Einsatz des Konzeptes im Verdichter eines Flugtriebwerks mit rund 25000 Pfund Schub ergibt sich unmittelbar eine Reduzierung des spezifischen Kraftstoffverbrauches von bis zu 0,5%.

Weiteres Potential liegt in der reduzierten Triebwerkslänge und der daraus resultierenden möglichen Verringerung der Laufspalte im Kerntriebwerkssektor (Hochdruckverdichter).

Bezugszeichenliste

| 10 | Fan (eine Stufe) |
| 11 | Booster (drei Stufen) |
| 12 | Hochdruckverdichter (zehn Stufen) |
| 13 | Gehäuse |
| 14 | Ringkanal |
| 15 | Rotortrommel 1 (Nabe) |
| 16 | Maschinenachse |
| 17 | Rotortrommel 2 (Nabe) |
| 18 | Rotor |
| 19 | Stator |
| 20 | Mittlere Meridian-Stromlinie |
| 21 | Profilskelettlinie |
| 22 | Schaufelprofilschnitt |
| 23 | Rotormittelschnitt |

Patentansprüche

1.  Strömungsarbeitsmaschine mit mindestens einer in einem Ringkanal (14) angeordneten Rotorschaufelreihe, die - in ihrem Mittelschnitt und/oder gemittelt über die Schaufelhöhe betrachtet - eine Relativabströmung aufweist,
    **dadurch gekennzeichnet, dass** der betreffende Rotor (18) im Bereich seiner Hinterkante (HK) im Wesentlichen eine Ausrichtung in Meridianrichtung (m) aufweist, welche im Wesentlichen gleich der Meridianströmungsrichtung ist,
    wobei eine mittlere Meridianstromlinie (20) durch die geometrische Mitte des Ringkanals (14) gebildet wird,
    wobei an jedem Ort der mittleren Meridianstromlinie (20) Normalen errichtet sind, längs derer der Ringkanal (14) in 21 äquidistante Meridianstromlinien (20) unterteilt ist,
    wobei der Schnitt jeder Meridianstromlinie (20) mit der Rotorschaufel einen Stromlinienprofilschnitt ergibt,
    wobei sich in jedem Stromlinienprofilschnitt ein Eintrittsmetallwinkel ($\varepsilon_1$) und ein Austrittsmetallwinkel ($\varepsilon_2$) ergeben,
    wobei die einzelnen Austrittswinkel ($\varepsilon_2$) arithmetisch gemittelt sind gemäß der folgenden Formel:

$$\varepsilon_{2G} = \frac{1}{21} \sum_{i=1}^{21} \varepsilon_{2i}$$

wobei der sich ergebende gemittelte Austrittsmetall-winkel ($\varepsilon_{2G}$) einen Wert zwischen 5° und 20° aufweist,

wobei die einzelnen Eintrittsmetallwinkel ($\varepsilon_1$) arithmetisch gemittelt sind gemäß der folgenden Formel:

$$\varepsilon_{1G} = \frac{1}{21} \sum_{i=1}^{21} \varepsilon_{1i} \quad,$$

wobei der gemittelte Eintrittsmetallwinkel ($\varepsilon_1$) mindestens 50° beträgt,

wobei stromauf des Rotors (18) befindliche Baugruppen wie Streben oder Schaufelreihen mit einem Austrittsmetallwinkel ($\varepsilon_2$), nicht größer als 15° versehen sind.

2. Strömungsarbeitsmaschine nach Anspruch 1, **dadurch gekennzeichnet, dass** der Rotor (18) in einer ersten Rotorschaufelreihe in Strömungsrichtung hinter einem Fan (10) im Kernstromabschnitt eines Flugtriebwerks angeordnet ist.

3. Strömungsarbeitsmaschine nach einem der Ansprüche 1 oder 2, **dadurch gekennzeichnet, dass** mehrere Rotorschaufelreihen in in Strömungsrichtung aufeinanderfolgenden Stufen angeordnet sind.

**Claims**

1. Fluid-flow machine with at least one rotor blade row arranged in an annular duct (14), which blade row - in its center section and/ or averaged over the blade height - provides for a relative outflow,
**characterized in that** the respective rotor (18) in its trailing edge (HK) area is essentially orientated in the meridional direction (m), which essentially corresponds to the meridional flow direction,
where a mean meridional flow line (20) is formed by the geometrical center of the annular duct (14),
where normals are erected at any point of the mean meridional flow line (20), along which normals the annular duct (14) is divided into 21 equidistant meridional flow lines (20),
where the intersection of each meridional flow line (20) with the rotor blade establishes a flow line profile section,
where in each flow line profile section an entry metal

angle ($\varepsilon_1$) and an exit metal angle ($\varepsilon_2$) are established,
where the individual exit angles ($\varepsilon_2$) are arithmetically averaged according to the following formula:

$$\varepsilon_{2G} = \frac{1}{21} \sum_{i=1}^{21} \varepsilon_{2i} \quad,$$

where the resulting averaged exit metal angle ($\varepsilon_{2G}$) ranges between 5° and 20°,
where the individual entry metal angles ($\varepsilon_1$) are arithmetically averaged according to the following formula:

$$\varepsilon_{1G} = \frac{1}{21} \sum_{i=1}^{21} \varepsilon_{1i} \quad,$$

where the averaged entry metal angle ($\varepsilon_1$) is at least 50°,
where assemblies arranged upstream of the rotor (18), such as struts or blade rows, feature an exit metal angle ($\varepsilon_2$) not exceeding 15 degrees.

2. Fluid-flow machine in accordance with Claim 1, **characterized in that** the rotor (18) in a first rotor blade row is arranged in the flow direction downstream of a fan (10) in the core flow section of an aircraft engine.

3. Fluid-flow machine in accordance with one of the Claims 1 or 2, **characterized in that** several rotor blade rows are arranged in stages following each other in the direction of flow.

**Revendications**

1. Machine à écoulement avec au moins une rangée d'aubes de rotor, disposée dans un canal annulaire (14), laquelle rangée présente - en coupe médiane et/ ou moyennée sur la hauteur de l'aube - un écoulement d'évacuation relatif,
**caractérisée en ce que** le rotor concerné (18) au niveau de son bord de fuite (HK) présente pour l'essentiel une orientation dans le sens méridien (m) qui est essentiellement identique au sens d'écoulement méridien,
sachant qu'une moyenne ligne méridienne d'écoulement (20) est formée par le centre géométrique du canal annulaire (14),
sachant qu'en tout point de la moyenne ligne méridienne d'écoulement (20) sont érigées des normales le long desquelles le canal annulaire (14) est divisée en 21 lignes méridiennes d'écoulement équidistantes (20),

sachant que l'intersection entre chaque ligne méridienne d'écoulement (20) et l'aube du rotor donne une coupe de profil de la ligne d'écoulement,

sachant que se forment dans chaque coupe de profil de la ligne d'écoulement un angle métal d'entrée ($\varepsilon_1$) et un angle métal de sortie ($\varepsilon_2$),

sachant que les différents angles de sortie ($\varepsilon_2$) sont une moyenne arithmétique calculée selon la formule suivante :

$$\varepsilon_{2G} = \frac{1}{21} \sum_{i=1}^{21} \varepsilon_{2i} \, ,$$

sachant que l'angle métal de sortie ($\varepsilon_{2G}$) moyenné résultant présente une valeur comprise entre 5° et 20°,

sachant que les différents angles métal d'entrée ($\varepsilon_1$) sont une moyenne arithmétique calculée selon la formule suivante :

$$\varepsilon_{1G} = \frac{1}{21} \sum_{i=1}^{21} \varepsilon_{1i} \, ,$$

sachant que l'angle métal d'entrée ($\varepsilon_1$) moyenné est au moins de 50°,

sachant que des sous-ensembles situés en amont du rotor (18), tels que des montants ou rangées d'aubes, sont dotés d'un angle métal de sortie ($\varepsilon_2$) qui ne dépasse pas 15°.

2. Machine à écoulement selon la revendication n° 1, **caractérisée en ce que** le rotor (18) dans une première rangée d'aubes de rotor est disposé dans le sens d'écoulement en aval d'une soufflante (10) dans la section de flux central d'un moteur d'avion.

3. Machine à écoulement selon une des revendications n° 1 ou n° 2, **caractérisée en ce que** plusieurs rangées d'aubes de rotor sont disposées dans des étages se consécutifs dans le sens d'écoulement.

Fig. 1:

Fig. 2:

**A.**

Stator n+1
Rotor n+1
Stator n
Rotor n
Vor-leit-rad

13
14
15
16
r
x

**B.**

17
Stator n+1
Rotor n+1
Rotor n
13
14
15
16
r
x

**C.**

Stator (n) aussen
Stator (n) innen
Rotor (n)
Rotor (n+1)
Stator (n+1)
13
15
16
r
x

**D.**

17
13
Stator (n+1)
Rotor (n+1)
S (n)
R (n+1)
S (n+1)
Rotor (n)
13
14
15
16
r
x

Fig. 3:

Fig. 4a:

**Fig. 4b:**

Stand der Technik

Erfindungsgemäße Anordnung

**Fig. 5:**

Fig. 6:

$\varepsilon_{1M} > 50°$

$T_{VK}$

VK

DS (konkav)

23

SS (konvex)

HK

$T_{HK}$

$5° < \varepsilon_{2M} < 15°$

m

u

**Fig. 7:**

EP 2 096 260 B1

$$(1) \quad \varepsilon_{1G} = \frac{1}{21} \sum_{i=1}^{21} \varepsilon_{1i}$$

$$(2) \quad \varepsilon_{2G} = \frac{1}{21} \sum_{i=1}^{21} \varepsilon_{2i}$$

$$(3) \quad \begin{aligned} &\varepsilon_{1M} > 50° \\ &\text{und/oder} \quad \varepsilon_{1G} > 50° \end{aligned}$$

$$(4) \quad \begin{aligned} &5° < \varepsilon_{2M} < 15° \\ &\text{und/oder} \quad 5° < \varepsilon_{2G} < 15° \end{aligned}$$

21 äquidistante Stromlinienschnitte gemäß Definition nach Fig. 2

SL21 (G)
SL19
SL17
SL15
SL13
SL11 (M)
SL9
SL7
SL5
SL3
SL1 (N)

Gehäuse

HK

Nabe

VK

r

x

# Fig. 8:

## Nebenstromkonfiguration

13

Fan-
Nebenstrom-
Stator

Fan

Fan-
Kernstrom-
Stator

**HL-Gestaltung
am ersten
Kernstrom-Rotor**

r

u

x

15

16

## Repetierkonfiguration

13

Statoren

15

**HL-Gestaltung
an aufeinander folgenden
Rotoren mehrstufiger
Strömungsarbeitsmaschinen**

r

u

x

16

EP 2 096 260 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008026788 A1
- GB 609322 A
- EP 1186747 A2
- GB 944166 A
- EP 0441097 A1
- DE 2552073 A1
- GB 2085976 A